# EUROPEAN PATENT APPLICATION

(11) **EP 2 634 448 A1**
(43) Date of publication of application: **04.09.2013**
(21) Application number: 10858952.4
(22) Date of filing: 29.10.2010
(51) Int. Cl.: F16D 69/00, F16D 69/02, F16D 69/04

(54) **BRAKE LINING AND PROCESS FOR PRODUCING SAME**

(71) Applicant: Mitsubishi Electric Corporation, Tokyo 100-8310 (JP)
(72) Inventor: OTA, Hitoshi, Tokyo 100-8310 (JP); HASHIMOTO, Akira, Tokyo 100-8310 (JP); NAKAHARA, Yuji, Tokyo 100-8310 (JP)
(74) Representative: HOFFMANN EITLE
(86) International application number: PCT/JP2010/069317
(87) International publication number: WO 2012/056563

(57) **Abstract**

A brake lining includes a lining main body that is pressed against a braked body. The lining main body includes: a fixing layer that includes a fixing layer fiber material; an intermediate layer that is disposed on the fixing layer; and a surface layer that is disposed on the intermediate layer, that includes a surface layer fiber material, and that is placed in contact with and separated from the braked body, and a different type of fiber than the fixing layer fiber material is used as the surface layer fiber material.

## Description

### TECHNICAL FIELD

The present invention relates to a brake lining that is used in elevator hoisting machine brakes, for example, and to a manufacturing method therefor.

### BACKGROUND ART

In conventional brake pads, hardness of a surface layer portion is lowered by increasing the amount of rubber in the surface layer portion in order to improve initial conformability, and keep the coefficient of friction stable. When such a brake pad is manufactured, a friction member to which rubber has been added to lower hardness and a harder friction member are produced separately, and are inserted into a mold such that the friction member that has lower hardness is disposed above the friction member that has higher hardness, and are shaped by compression. Furthermore, an adhesive is applied in advance to a side near the base plate, and the two friction members are shaped by compression after application of the adhesive (see Patent Literature 1, for example).

In conventional brake friction pad assemblies, in order to achieve brake noise reduction, linings are disposed on two surfaces of a supporting plate, and a first lining is used as a braking member, and a second lining as a noise reducing member (see Patent Literature 2, for example).

### CITATION LIST

### PATENT LITERATURE

[Patent Literature 1]
   Japanese Patent Laid-Open No. 2000-104770 (Gazette)
[Patent Literature 2]
   Japanese Patent Laid-Open No. HEI 8-105475 (Gazette)

### SUMMARY OF THE INVENTION

### PROBLEM TO BE SOLVED BY THE INVENTION

If a damping material such as rubber is added to a friction material in order to keep the coefficient of friction stable, for example, then initial frictional characteristics may be improved, but there is a possibility that the coefficient of friction may fluctuate due to environmental variations, such as changes in temperature or humidity, or formation of rust on braking surfaces of a brake drum or disk, for example. In environments such as those in which oil mist forms, there is a possibility that the rubber itself may degrade, and the predetermined braking characteristics may not be obtained.

Elevator hoisting machine brakes are designed to brake when rotation of a rotor is stopped, and the linings are pressed against the rotor by braking springs during braking. During release, on the other hand, the linings are pulled away from the rotor by electromagnetic attractive forces that are greater than the spring forces of the braking springs. In such brakes, because the linings contact the rotor with large forces for short periods, impact noise may be generated, particularly during braking. Noise reducing pads may also be disposed in order to suppress such brake operating noise, but it has been difficult to ensure sufficient noise reduction.

The present invention aims to solve the above problems and an object of the present invention is to provide a brake lining that can ensure frictional characteristics that are stable against environmental variations.

### MEANS FOR SOLVING THE PROBLEM

In order to achieve the above object, according to one aspect of the present invention, there is provided a brake lining that includes a lining main body that is pressed against a braked body, the lining main body includes: a fixing layer that includes a fixing layer fiber material; an intermediate layer that is disposed on the fixing layer; and a surface layer that is disposed on the intermediate layer, that includes a surface layer fiber material, and that is placed in contact with and separated from the braked body, and a different type of fiber than the fixing layer fiber material is used as the surface layer fiber material.
According to another aspect of the present invention, there is provided a brake lining manufacturing method characterized in including steps of: disposing a mold on a base; forming a fixing layer on the base by inserting inside the mold and pressing with a punch a fixing layer fiber material and a fixing layer friction material that are premixed; forming an intermediate layer on the fixing layer by inserting inside the mold and pressing an intermediate layer fiber material and an intermediate layer friction material that are premixed; and forming a surface layer on the intermediate layer by inserting inside the mold and pressing a surface layer fiber material and a surface layer friction material that are premixed.

### EFFECTS OF THE INVENTION

In the brake lining according to the present invention, because the lining main body has a multilayered construction, and a different type of fiber than the fixing layer friction material is used as the surface layer fiber material, overall frictional characteristics of the lining can be amply stabilized against environmental variations by using a fiber that has frictional characteristics that are stable against environmental variations as the surface layer fiber material. Increases in cost can be suppressed by using a less expensive fiber than the surface layer fiber material as the fixing layer friction material.
Using the brake lining manufacturing method according to the present invention, conventional equipment can be reused without introducing new manufacturing equipment, enabling a brake lining that has frictional characteristics that are stabilized against environmental variations to be manufactured inexpensively.

### BRIEF DESCRIPTION OF THE DRAWINGS

Figure 1 is a side elevation that schematically shows a brake lining and a brake drum according to Embodiment 1 of the present invention;
Figure 2 is a front elevation that shows an elevator hoisting machine brake that is an example of application of the brake lining in Figure 1;
Figure 3 is a side elevation that shows a shoe from Figure 2 enlarged;
Figure 4 is a cross section that schematically shows a state during manufacturing of the brake lining in Figure 1;
Figure 5 is a cross section that schematically shows a subsequent manufacturing step from Figure 4;
Figure 6 is a cross section that schematically shows a subsequent manufacturing step from Figure 5;
Figure 7 is a cross section that schematically shows a subsequent manufacturing step from Figure 6;
Figure 8 is a cross section that schematically shows a brake lining according to Embodiment 2 of the present invention;
Figure 9 is a plan that shows the brake lining in Figure 8;
Figure 10 is a cross section that schematically shows a brake lining according to Embodiment 3 of the present invention;
Figure 11 is a plan that schematically shows a brake lining according to Embodiment 4 of the present invention;
Figure 12 is a side elevation that schematically shows a brake lining and a brake drum according to Embodiment 5 of the present invention;
Figure 13 is a cross section that schematically shows a brake lining according to Embodiment 6 of the present invention;
Figure 14 is a cross section that schematically shows a state during manufacturing of the brake lining in Figure 13;
Figure 15 is a cross section that schematically shows a brake lining according to Embodiment 7 of the present invention;
Figure 16 is a plan that shows the brake lining in Figure 15; and
Figure 17 is a side elevation that schematically shows a brake lining according to Embodiment 8 of the present invention.

### DESCRIPTION OF EMBODIMENTS

Preferred embodiments of the present invention will now be explained with reference to the drawings.

### Embodiment 1

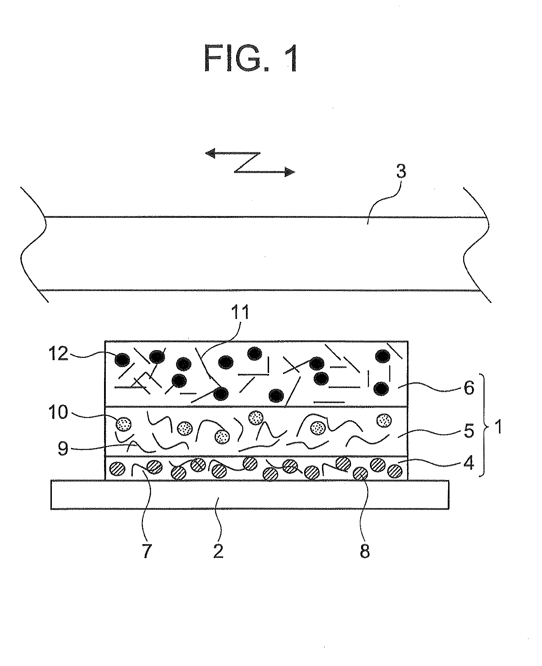

Figure 1 is a side elevation that schematically shows a brake lining and a brake drum according to Embodiment 1 of the present invention. Arrows in the figure represent relative directions of slippage between the brake lining and the brake drum.

In the figure, a brake lining has: a lining main body 1; and a base plate 2 that functions as a base that supports the lining main body 1. The lining main body 1 faces a brake drum (a rotor) 3 which constitutes a braked body so as to have a predetermined gap interposed, and brakes or holds the rotation of the brake drum 3 in a stationary state by being pressed against the brake drum 3.

The lining main body 1 has a multilayered construction that includes a fixing layer 4, an intermediate layer 5, and a surface layer 6. The fixing layer 4 is a layer for fixing the lining main body 1 to the base plate 2 by adhesion. In other words, the fixing layer 4 is formed directly on and fixed to the base plate 2. A fixing layer fiber material 7 that constitutes a substrate and a fixing layer friction material 8 are included in the fixing layer 4.

The intermediate layer 5 is formed on the fixing layer 4. The intermediate layer 5 is interposed between the fixing layer 4 and the surface layer 6. An intermediate layer fiber material 9 that constitutes a substrate and an intermediate layer friction material 10 are included in the intermediate layer 5.

The surface layer 6 is formed on the intermediate layer 5, and is placed in contact with and separated from the brake drum 3. A surface layer fiber material 11 that constitutes a substrate and a surface layer friction material 12 are included in the surface layer 6.

Carbon fiber is used as the surface layer fiber material 11. In contrast to that, fibers other than carbon fiber that are less expensive than carbon fiber are used as the fixing layer fiber material 7 and the intermediate layer fiber material 9. Examples of such less expensive fibers include glass fiber, steel fiber, aramid fiber, or potassium titanate, for example. Moreover, identical fibers may also be used in the fixing layer fiber material 7 and the intermediate layer friction material 10, or different fibers may also be used.

The surface layer friction material 12 is constituted by a friction modifier, a fillers, and a binder. The friction modifier is constituted by an abrasive and a lubricant, etc. The fixing layer friction material 8 does not include a friction modifier, and is constituted by a material in which primarily a filler and a binder are combined. The intermediate layer friction material 10 is also constituted by a material in which primarily a filler and a binder are combined in a similar manner to that of the fixing layer friction material 8. However, the mixing ratio of the binder is set so as to be greater in the fixing layer friction material 8 than in the intermediate layer friction material 10, which is set so as to be greater than in the surface layer friction material 12.

Cashew dust, rubber dust, copper, an abrasive (such as alumina or zirconia, etc.), and a lubricant (such as graphite or molybdenum disulfide), for example, are used as the above friction modifier. Calcium carbonate, barium sulfate, calcium sulfate, or tin sulfide, for example, is used as the filler. A phenolic resin, a melamine resin, or a polyimide, for example, is used as the binder.

In a brake lining of this kind, carbon fiber is used in the surface layer fiber material 11, which is a substrate of the surface layer 6 that contacts the brake drum 3 directly. The carbon fiber has superior heat resistance and temperature dependency is reduced compared to other fibers, and irregularities in coefficient of friction are also reduced. The carbon fiber also has superior strength characteristics, and environmental resistance is also improved. Because of that, environmental resistance and heat resistance of the brake lining are improved, enabling the coefficient of friction to be kept stable. Because fluctuations in the coefficient of friction can be suppressed by using the carbon fiber, reductions in brake size and weight can be achieved, and the carbon footprint can also be suppressed during manufacturing.

Because expensive carbon fiber is used only in the surface layer fiber material 11, and fibers that are less expensive than carbon fiber are used in the fixing layer fiber material 7 and the intermediate layer fiber material 9, increases in material costs due to using carbon fiber can be suppressed.

In addition, because friction modifiers are used only in the surface layer 6, material costs can be further saved.

A brake lining such as that described above can be applied to an elevator hoisting machine brake, for example. The elevator hoisting machine has: a driving sheave; a motor that rotates the driving sheave; and a brake that brakes rotation of the driving sheave. A suspending means (a rope or a belt) that suspends a car and a counterweight is wound around the driving sheave. The car and the counterweight are raised and lowered inside a hoistway by the rotation of the driving sheave.

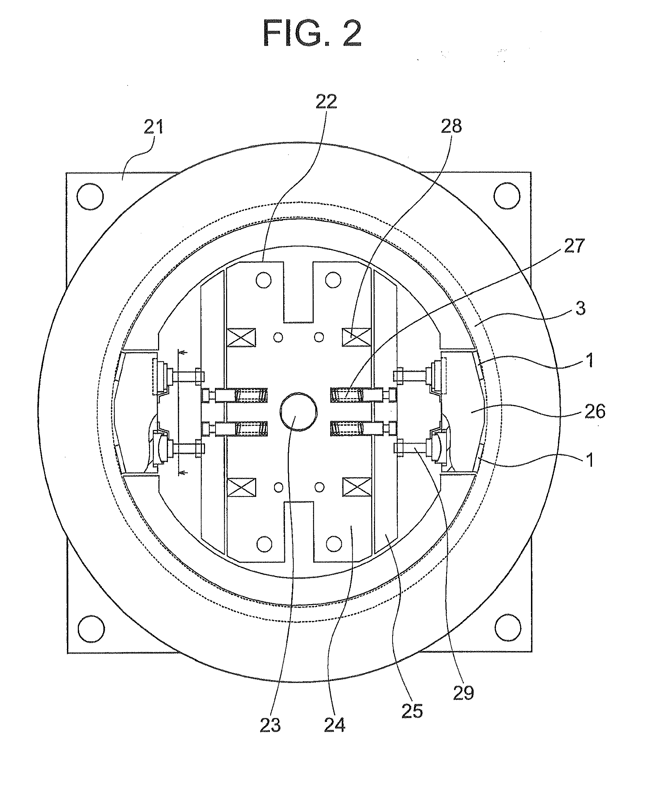

Figure 2 is a front elevation that shows an elevator hoisting machine brake 21 that is an example of application of the brake lining 22 in Figure 1. In the figure, a brake 22 is mounted internally into the elevator hoisting machine 21. A brake drum 3 is rotatably supported by a fixed shaft (a main shaft) 23, and is rotated together with the driving sheave. The brake 22 is disposed inside the brake drum 3, and is fixed so as not to rotate relative to the fixed shaft 23.

The brake 22 has: a fixed core 24; a pair of movable cores 25; a pair of shoes 26; and a plurality of braking springs 27. The movable cores 25 are disposed on two ends of the fixed core 24 so as to be positioned on opposite sides of the fixed core 24. A pair of coils 28 are mounted internally into portions of the fixed core 24 that face the movable cores 25.

The respective shoes 26 are fixed to the movable cores 25 by pairs of supporting bolts 29. Two lining main bodies 1 are fixed to each of the shoes 26 by means of base plates 2 (omitted from Figure 2).

Normally, when the driving sheave and the brake drum 3 rotate, electromagnetic forces that attract the movable cores 25 are generated in the fixed core 24 by passing electric current to the coils 28 to keep the brake 22 in a released state. In the released state, the movable cores 25 and the shoes 26 are displaced toward the fixed core 24 to pull the lining main bodies 1 away from the brake drum 3.

When the passage of electric current to the coils 28 is shut off after the driving sheave and the brake drum 3 are stopped, the movable cores 25 and the shoes 26 are displaced away from the fixed core 24 by the spring forces from the braking springs 27, pressing the lining main bodies 1 against an inner circumferential surface (a braking surface) of the brake drum 3. The stationary state of the brake drum 3 is thereby held.

Holding the stationary state of the driving sheave and the brake drum 3 in this manner is a major function of the brake 22 of the elevator hoisting machine 21. Here, in order to ensure braking torque, it is necessary to keep the coefficient of friction between the lining main bodies 1 and the brake drum 3 stable.

It is desirable to be able to suppress fluctuations in the coefficient of friction even if the environment where the elevator hoisting machine 21 is installed changes due to changes in temperature or humidity, or formation of oil mist, for example. If the coefficient of friction of the lining main bodies 1 is likely to be reduced due to environmental variations, then it becomes necessary to increase the spring forces of the braking springs 27 in order to ensure the required braking torque. However, if the spring forces of the braking springs 27 are increased, it becomes necessary to increase the size of the coils 28 in order to achieve electromagnetic attractive forces that oppose the spring forces, also increasing the electric power consumption of the coils 28.

If less expensive fibers than carbon fiber are used as the substrate of the lining main bodies 1, then irregularities in the coefficient of friction increase if the surface state changes due to temperature, humidity, etc., since the form of friction depends on the state of contact between the lining main bodies 1 and the brake drum 3. If humidity is high, for example, water films, etc., may be formed between the lining main bodies 1 and the brake drum 3, making the coefficient of friction more likely to be reduced.

In answer to that, because carbon fiber that has high rigidity and strength is used as the surface layer fiber material 11 in the brake lining according to Embodiment 1, effects can be achieved in which the surface of the brake drum 3 is gripped by the fibers themselves. Because of that, even if a water film is formed on the surface of the brake drum 3, for example, fine needle-like fibers break through the water film, enabling reductions in the coefficient of friction to be suppressed.

Consequently, by using the carbon fiber in the surface layer fiber material 11, irregularities in the coefficient of friction due to environmental variations can be suppressed, reducing the spring forces of the braking springs 27 and the electromagnetic attractive forces between the fixed core 24 and the movable cores 25, enabling reductions in size and weight of the brake 22 to be achieved. The carbon footprint at the factory can also be reduced due to the reductions in size and weight of the brake 22.

In the brake 22 of the elevator hoisting machine 21, impact noise arises during braking at the instant that the lining main bodies 1 and the brake drum 3 contact. Here, the harder the lining main bodies 1 the louder the impact noise. Normally, the hardness of the lining main bodies 1 tends to increase as the amount of binder increases.

In answer to that, in the brake lining according to Embodiment 1, the intermediate layer 5 is disposed between the surface layer 6 and the fixing layer 4, and the mixing ratios of the binders in the friction materials 8, 10 and 12 increase toward the base plate 2. Because of that, impact noise can be dampened efficiently by ensuring that the hardness of the lining main bodies 1 does not increase sharply near the surface.

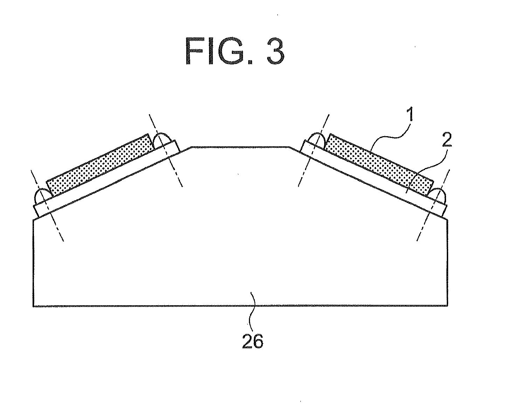

Figure 3 is a side elevation that shows a shoe 26 from Figure 2 enlarged. The lining main bodies 1 are formed on the base plates 2, and are fixed to the shoe 26 by fastening the base plates 2 to the shoe 26 using screws.

If the lining main bodies 1 are glued to the shoe 26 using an adhesive, then manufacturing steps become complicated because it is necessary to preheat the shoe 26 before gluing, or to place it in a heating furnace for an extended period, etc. In contrast to that, in Embodiment 1, because the lining main bodies 1 are preformed on the base plates 2, the manufacturing process can be simplified by fixing the base plates 2 to the shoe 26 using screws (or using screws and pins in combination), enabling the brake 22 to be manufactured inexpensively.

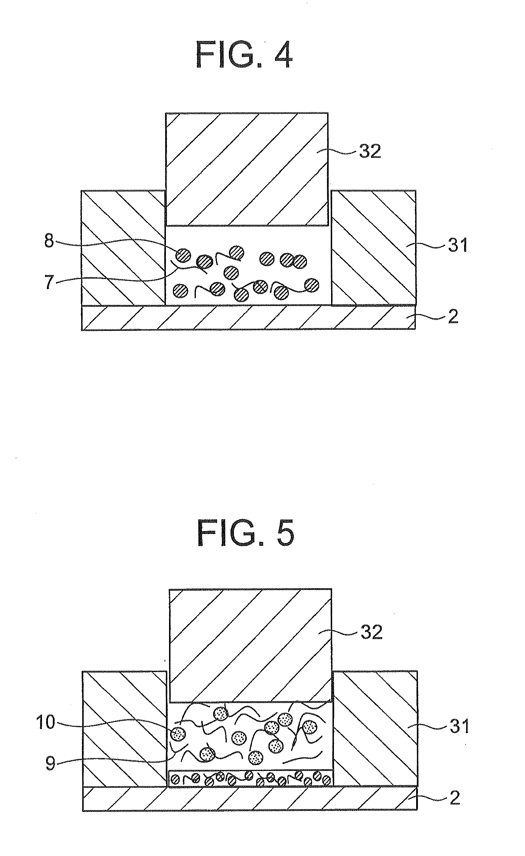

Next, a brake lining manufacturing method according to Embodiment 1 will be explained. Figure 4 is a cross section that schematically shows a state during manufacturing of the brake lining in Figure 1. When manufacturing a brake lining, a rectangular frame-shaped mold 31 is first disposed on the base plate 2. The base plate 2 and the mold 31 are then heated using a heater and held at a predetermined temperature.

Predetermined amounts of the fixing layer fiber material 7 and the fixing layer friction material 8 are subsequently inserted inside the mold 31, and are pushed in with a predetermined pressure using a punch 32. In conventional molding, pressing is continued for a predetermined amount of time while maintaining the predetermined pressure, but in this example, the punch 32 is pulled out immediately after reaching the predetermined pressure. The fixing layer 4 is thereby molded onto the base plate 2.

After forming the fixing layer 4, as shown in Figure 5, predetermined amounts of the intermediate layer fiber material 9 and the intermediate layer friction material 10 are inserted inside the mold 31, and are pushed in with a predetermined pressure using the punch 32. Here also, the punch 32 is pulled out immediately after reaching the predetermined pressure. The intermediate layer 5 is thereby molded onto the fixing layer 4.

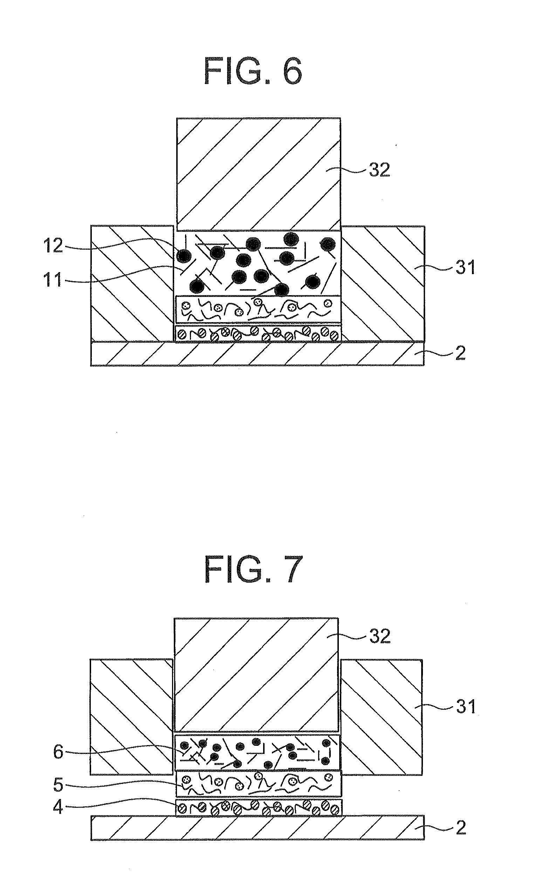

After forming the intermediate layer 5, as shown in Figure 6, predetermined amounts of the surface layer fiber material 11, i.e., carbon fiber, and the surface layer friction material 12 are inserted inside the mold 31, and are pushed in with a predetermined pressure using the punch 32. The surface layer 6 is thereby molded onto the intermediate layer 5. During molding of the surface layer 6, pressing is continued for a predetermined amount of time while maintaining the predetermined pressure.

Lastly, the brake lining is removed from the mold 31, and the entire integrated lining main body 1 and base plate 2 is baked. When the brake lining is removed from the mold 31, as shown in Figure 7, for example, the punch 32 need only be pushed in while the mold 31 is held, or the mold 31 lifted upward while the brake lining is pressed by the punch 32.

In a brake lining manufacturing process such as that described above, because a lining main body 1 that has a multilayered construction can be manufactured using a manufacturing apparatus that is practically identical to conventional ones, a high-performance brake lining can be achieved without having to invest in new plant and equipment.

Because the lining main body 1 can be formed directly on the base plate 2, a gluing step for the lining main body 1 is unnecessary, enabling manufacturing costs to be suppressed.

Moreover, in Embodiment 1, a three-layer lining main body 1 is shown, but the number of layers in the lining main body 1 may also be made greater than or equal to four, and in that case can also be manufactured by an identical or similar manufacturing method.
In Embodiment 1, the lining main body 1 is formed on the base plate 2, and then the base plate 2 is fixed to the shoe 26, but the lining main body 1 may also be formed directly on the shoe 26 by a method such as that described above.

### Embodiment 2

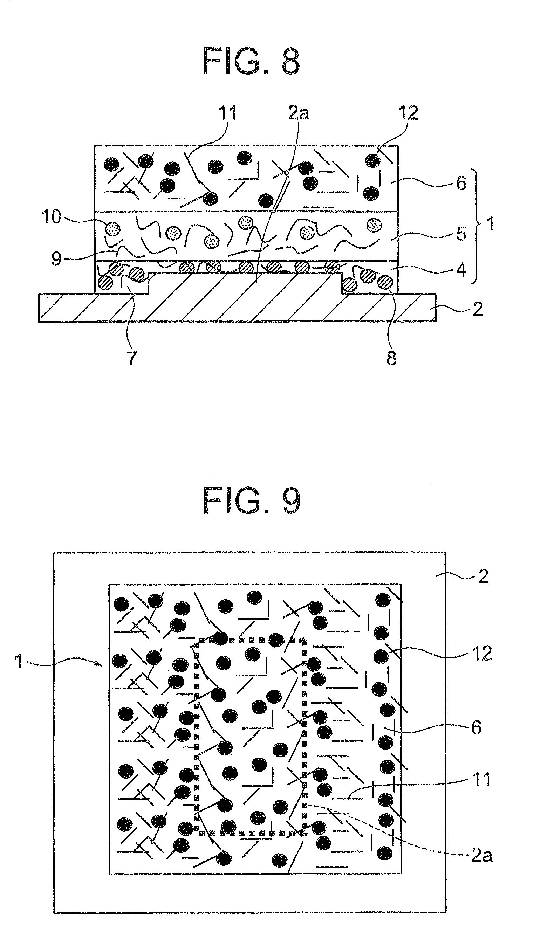

Next, Figure 8 is a cross section that schematically shows a brake lining according to Embodiment 2 of the present invention, and Figure 9 is a plan that shows the brake lining in Figure 8. In the figures, a rectangular projection (a projecting portion) 2a is disposed centrally on a surface of the base plate 2 on which a fixing layer 4 is formed. The projection 2a is completely covered by the fixing layer 4. The rest of the configuration and the manufacturing method are similar or identical to those of Embodiment 1.

In a brake lining of this kind, even if braking force from the brake is large, and large shearing forces act on the interface between the base plate 2 and the fixing layer 4, because the projection 2a is disposed centrally on the base plate 2, contact area between the base plate 2 and the fixing layer 4 is increased, and shearing forces can also be borne by surfaces around a perimeter (side surfaces) of the projection 2a, enabling stable performance to be accomplished even if a large braking force acts thereon.

### Embodiment 3

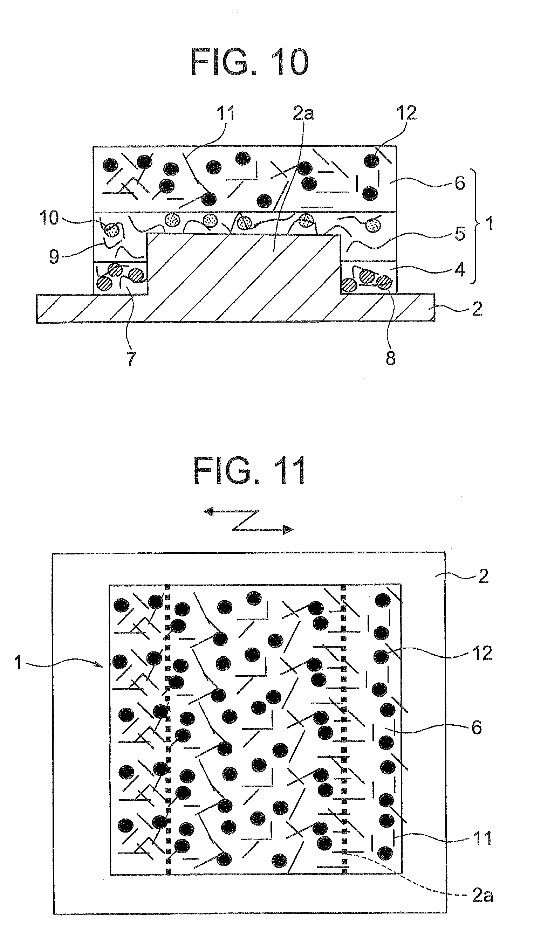

Next, Figure 10 is a cross section that schematically shows a brake lining according to Embodiment 3 of the present invention. In this example, a height of a projection 2a is greater than a thickness of a fixing layer 4. The rest of the configuration and the manufacturing method are similar or identical to those of Embodiment 2.

In a brake lining of this kind, because the height of the projection 2a is higher than in Embodiment 2, contact area between the base plate 2 and the lining main body 1 and the area of the portion that bears shearing forces are further increased, enabling application to brakes that have even larger braking force.

### Embodiment 4

Next, Figure 11 is a plan that schematically shows a brake lining according to Embodiment 4 of the present invention. In this example, a projection 2a is disposed over an entire length of a lining main body 1 in a direction that is perpendicular to a direction in which shearing forces are borne (perpendicular to a relative direction of slippage between the brake lining and the brake drum 3). The rest of the configuration and the manufacturing method are similar or identical to those of Embodiment 2 or 3.

If the direction in which shearing forces are borne is only two directions, leftward and rightward in Figure 11, a brake lining of this kind can be applied to brakes that have large braking forces because the area that bears the shearing forces is increased.

### Embodiment 5

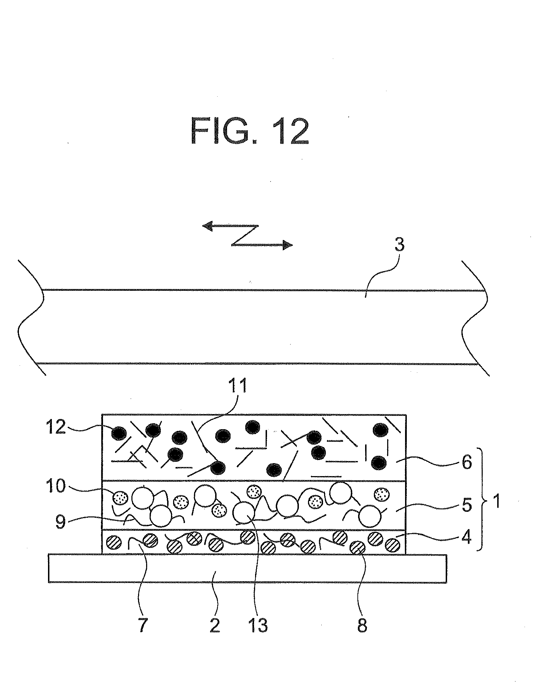

Next, Figure 12 is a side elevation that schematically shows a brake lining and a brake drum according to Embodiment 5 of the present invention. In the figure, a granular damping material (a sound absorbing material) 13 is added to an intermediate layer 5 in addition to an intermediate layer fiber material 9 and an intermediate layer friction material 10. Natural rubber, synthetic rubber, silicone rubber, or glass wool, for example, can be used as the damping material 13. The rest of the configuration and the manufacturing method are similar or identical to those of Embodiment 1, 2, 3, or 4.

In a brake lining of this kind, because the damping material 13 is added to the intermediate layer 5, internal damping characteristics are improved, enabling damping effects of the intermediate layer 5 to be further improved, thereby enabling impact noise to be suppressed during braking. If the damping material 13 is exposed to the contact surface between the brake drum 3, irregularities may arise in the coefficient of friction, but in Embodiment 5, because the damping material 13 is added only to the intermediate layer 5, the damping material 13 will not be exposed to the contact surface between the brake drum 3. Because of that, impact noise can be absorbed by the intermediate layer 5 while irregularities in the coefficient of friction are suppressed by the surface layer 6, reducing fluctuations in the coefficient of friction even if the environment changes, thereby enabling a low-noise brake to be achieved.

In a rubber damping material 13, the coefficient of friction changes due to aging deterioration, but in Embodiment 5, because the damping material 13 is confined within the lining main body 1, a stable coefficient of friction can be ensured for a long period.

### Embodiment 6

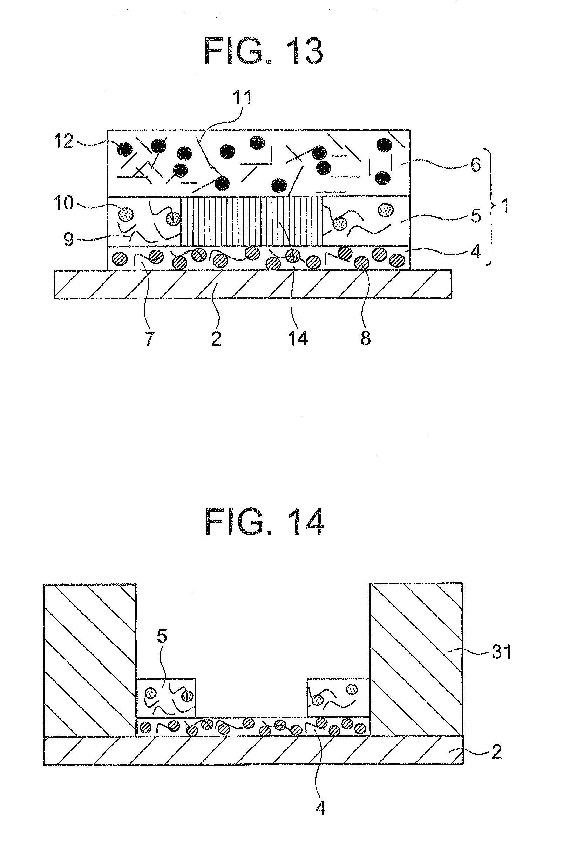

Next, Figure 13 is a cross section that schematically shows a brake lining according to Embodiment 6 of the present invention. In the figure, a sheet-shaped (flat) damping material (a sound absorbing material) 14 is disposed in a central portion of the intermediate layer 5. Polyurethane foam, glass wool, rubber, glass fiber, wool, silicone resin, or asphalt, for example, can be used as the damping material 14. The rest of the configuration is similar or identical to that of Embodiment 1, 2, 3, or 4.

Even if a sheet-shaped damping material 14 is used in this manner, impact noise can be absorbed by the intermediate layer 5 while irregularities in the coefficient of friction are suppressed by the surface layer 6, reducing fluctuations in the coefficient of friction even if the environment changes, thereby enabling a low-noise brake to be achieved.

Conventionally, sheet-shaped damping materials 14 are often softer than other materials that constitute the lining main body 1 and may be damaged by pressure during molding. Because of that, when manufacturing a brake lining, in Embodiment 1, the intermediate layer 5 is formed using a punch 32 in which the pressing surface is flat (Figure 5), but in Embodiment 6, the intermediate layer 5 is formed using a punch in which a projection is disposed on a central portion of the pressing surface. Because an aperture is thereby disposed centrally in the intermediate layer 5, the damping material 14 is disposed in this aperture. The rest of the manufacturing method is similar or identical to that of Embodiment 1, 2, 3, or 4.

Using a manufacturing method of this kind, pressure that acts on the damping material 14 can be alleviated during molding even if a sheet-shaped damping material 14 is used, enabling damage to the damping material 14 to be prevented.

### Embodiment 7

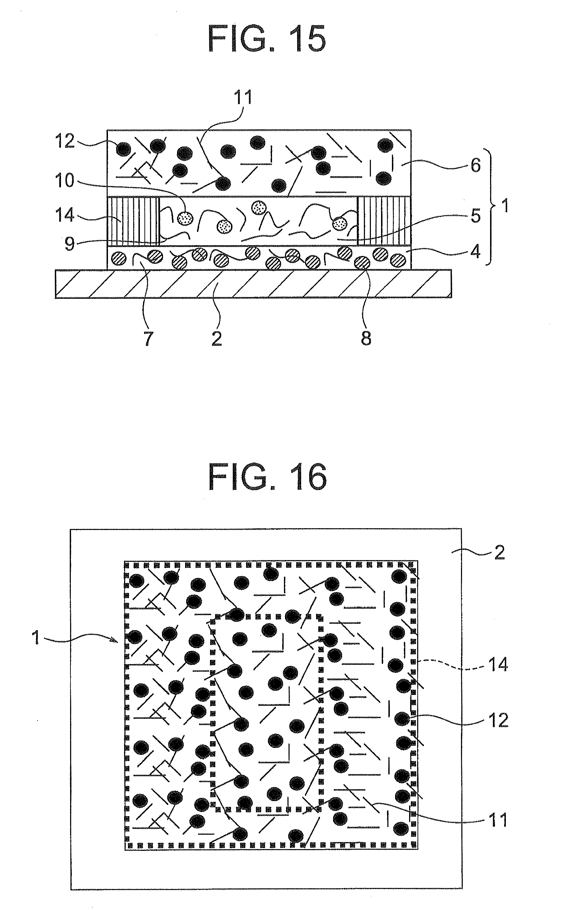

Next, Figure 15 is a cross section that schematically shows a brake lining according to Embodiment 7 of the present invention, and Figure 16 is a plan that shows the brake lining in Figure 15. In Embodiment 6, the damping material 14 is disposed centrally on the intermediate layer 5, but in Embodiment 7, a damping material 14 is disposed on an outer circumferential portion (a perimeter portion) of an intermediate layer 5. The rest of the configuration and the manufacturing method are similar or identical to those of Embodiment 6.

Using a brake lining of this kind, similar or identical effects to those of Embodiment 6 can also be achieved. In the early stages of use of the brake, contact area between the lining main body 1 and the brake drum 3 is reduced, and the lining main body 1 may make lopsided contact with the brake drum 3 on an edge portion thereof. If the damping material 14 is disposed on the perimeter portion of the intermediate layer 5, the impact noise can also be suppressed effectively in such cases.

Moreover, in Embodiment 5, a granular damping material 13 is used, and in Embodiments 6 and 7, sheet-shaped damping materials 14 are used, but the form of the damping material is not limited thereto, and a fibrous damping material may also be added to the intermediate layer 5, for example.
Different types of damping material may also be used in combination.

### Embodiment 8

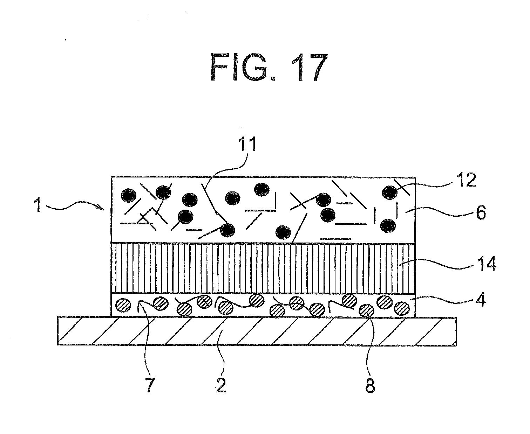

Next, Figure 17 is a side elevation that schematically shows a brake lining according to Embodiment 8 of the present invention. In Embodiment 8, a portion that corresponds to the intermediate layer 5 according to Embodiment 1 is constituted by only a sheet-shaped damping material 14. The rest of the configuration and the manufacturing method are similar or identical to those of Embodiment 1, 2, or 4.

If the capacity of the brake is small, then an intermediate layer can be constituted by only a damping material 14. That is, if the capacity of the brake is small, because the impact noise itself is also small, a material that has increased hardness can be used as the damping material 14. If the hardness of the damping material 14 is greater than or equal to other materials that constitute the lining main body 1, the damping material 14 will not be damaged during molding, enabling an intermediate layer to be constituted by only a damping material 14.

In a brake lining of this kind, because carbon fiber is used as the surface layer fiber material 11, environmental resistance and heat resistance of the brake lining are improved, enabling the coefficient of friction to be kept stable. Reductions in brake size and weight can also be achieved, and the carbon footprint can also be suppressed during manufacturing. In addition, because expensive carbon fiber is used only in the surface layer fiber material 11, and fibers that are less expensive than carbon fiber are used in the fixing layer fiber material 7 and the intermediate layer fiber material 9, increases in material costs due to using carbon fiber can be suppressed.

Moreover, in Figure 2, an example of application to the brake 22 of an elevator hoisting machine 21 is shown, but the present invention can also be applied to other industrial machinery such as hoists, and to motor brakes, and automotive brakes, for example, and similar or identical effects are exhibited.
In Figure 2, a brake 22 is shown that is of a type that is disposed inside the brake drum 3, and the brake lining is expanded outward, but the present invention can also be applied to a brake that is of a type that is disposed outside the brake drum 3.
In addition, in the above examples, a drum brake is shown, but the present invention can also be applied to a disc brake. The braked body is not limited to a rotating body, and may also move rectilinearly. In other words, the brake lining according to the present invention can be applied to any type of brake.
Furthermore, the shape of the base is not limited to a flat plate shape, and may also have a different shape.
In Figure 1, thickness relationships among the fixing layer 4, the intermediate layer 5, and the surface layer 6 are such that the fixing layer 4 is thinner than the intermediate layer 5, which is thinner than the surface layer 6, but is not limited thereto. In a disc brake in which the brake lining slides in continuous contact with a braking surface, for example, it is preferable for the thickness of surface layer 6 to be increased more than in the other layers. If the brake lining hardly brakes against the braking surface at all, as in an elevator hoisting machine, the surface layer 6 can be made thinner than the other layers.

## Claims

1. A brake lining that comprises a lining main body that is pressed against a braked body, the brake lining being **characterized in that**:
the lining main body comprises:
a fixing layer that comprises a fixing layer fiber material;
an intermediate layer that is disposed on the fixing layer; and
a surface layer that is disposed on the intermediate layer, that comprises a surface layer fiber material, and that is placed in contact with and separated from the braked body; and
a different type of fiber than the fixing layer fiber material is used as the surface layer fiber material.

2. A brake lining according to Claim 1, **characterized in that** carbon fiber is used as the surface layer fiber material.

3. A brake lining according to Claim 2, **characterized in that**:
the intermediate layer comprises an intermediate layer fiber material; and
a fiber other than carbon fiber is used as the fixing layer fiber material and the intermediate layer fiber material.

4. A brake lining according to Claim 1, **characterized in that**:
the surface layer comprises a friction modifier that comprises at least one of a abrasive and a lubricant; and
the fixing layer does not comprise the friction modifier.

5. A brake lining according to Claim 1, **characterized in that**:
the fixing layer, the intermediate layer, and the surface layer comprise a binder; and
a mixing ratio of the binder in the fixing layer is greater than a mixing ratio of the binder in the intermediate layer and the surface layer.

6. A brake lining according to Claim 1, **characterized in** further comprising a base that supports the lining main body,
the fixing layer being formed on the base.

7. A brake lining according to Claim 6, **characterized in that**:
a projection is disposed centrally on a surface of the base on which the fixing layer is formed.

8. A brake lining according to Claim 1, **characterized in that** a granular damping material is added to the intermediate layer.

9. A brake lining according to Claim 1, **characterized in that** a sheet-shaped damping material is disposed in the intermediate layer.

10. A brake lining manufacturing method **characterized in** comprising steps of:
disposing a mold on a base;
forming a fixing layer on the base by inserting inside the mold and pressing with a punch a fixing layer fiber material and a fixing layer friction material that are premixed;
forming an intermediate layer on the fixing layer by inserting inside the mold and pressing an intermediate layer fiber material and an intermediate layer friction material that are premixed; and
forming a surface layer on the intermediate layer by inserting inside the mold and pressing a surface layer fiber material and a surface layer friction material that are premixed.

11. A brake lining manufacturing method according to Claim 10, **characterized in that** pressing is continued for a predetermined amount of time while maintaining a predetermined pressure in the step of forming the surface layer.
